**Europäisches Patentamt**

**European Patent Office**

**Office européen des brevets**

(19)

(11) Veröffentlichungsnummer: **0 058 877**
A1

(12) **EUROPÄISCHE PATENTANMELDUNG**

(21) Anmeldenummer: 82100950.3

(22) Anmeldetag: 10.02.82

(51) Int. Cl.³: **B 01 D 1/28,** B 01 D 50/00,
C 12 C 9/00

(30) Priorität: 24.02.81 DE 3106873

(43) Veröffentlichungstag der Anmeldung: 01.09.82
Patentblatt 82/35

(84) Benannte Vertragsstaaten: **AT BE CH DE FR GB IT LI NL**

(71) Anmelder: **Linde Aktiengesellschaft,
Abraham-Lincoln-Strasse 21, D-6200 Wiesbaden (DE)**

(72) Erfinder: **Haaf, Siegfried, Holzweg 4, D-5000 Köln 50 (DE)**
Erfinder: **Corneille, Hans-Peter, In der Aue 83,
D-5000 Köln 50 (DE)**

(74) Vertreter: **Schaefer, Gerhard, Dr., Linde
Aktiengesellschaft Zentrale Patentabteilung,
D-8023 Höllriegelskreuth (DE)**

(54) **Verfahren zum Nutzen der Wärme der bei Eindickprozessen von Flüssigkeiten entstehenden Brüden.**

(57) Es wird ein Verfahren und eine Vorrichtung zur Nutzung der Wärme der bei Eindickprozessen von Flüssigkeiten entstehenden Brüden vorgeschlagen, wobei die Brüden zum Zwecke der Flüssigkeitserwärmung oder -verdampfung verdichtet und im Wärmetausch mit der Flüssigkeit gekühlt und kondensiert werden. Um eine möglichst wirtschaftliche Verfahrensweise zu ermöglichen wird vorgeschlagen, in den Brüden enthaltene Fremdstoffe vor der Verdichtung der Brüden aus diesen durch Abscheiden, Filtern oder Auswaschen abzutrennen.

0058877

Verfahren zur Nutzung der bei Eindickprozessen
von Flüssigkeiten entstehenden Brüden

Die Erfindung betrifft ein Verfahren zur Nutzung der Wärme der bei Eindickprozessen von Flüssigkeiten entstehenden Brüden, wobei die Brüden verdichtet und im Wärmetausch mit der Flüssigkeit gekühlt und kondensiert werden zum Zweck der Flüssigkeitserwärmung oder -verdampfung.

Ein derartiges Verfahren ist bekannt. Hierbei wird der Brüdendampf einer Flüssigkeit verdichtet und nachfolgend in einen Wärmetauscher geleitet, in dem der Brüdendampf in Wärmetausch mit dieser Flüssigkeit gebracht wird. Der Brüdendampf kondensiert und gibt Wärme an die Flüssigkeit ab. Anlagen zur Brüdenverdichtung sind daher meist ein energiesparendes und wirtschaftliches System. Diese Vorteile werden jedoch dadurch beeinträchtigt, daß der eigentliche Brüdenverdichter und ebenso der nachgeschaltete Kondensator relativ rasch verschmutzen. Zur Reinigung der Anlage muß die Brüdenverdichtungsanlage stillstehen. Als Folge kann der Eindickprozeß ebenfalls unterbrochen werden. Dies ist aber unwirtschaftlich. Wird der Eindickprozeß jedoch ohne Brüdenverdichtung fortgeführt, so steigt sowohl der Primärenergieverbrauch als auch der Anteil der nutzlos

0058877

abzuführenden Wärme an. In Anlagen zum Eindicken von Flüssigkeiten kann die in den Brüden enthaltene Wärme zwar zur Bereitung von Warmwasser genutzt werden, jedoch ist der Anteil der auf diese Weise genutzten Wärme entsprechend dem Wärmebedarf der jeweiligen Anlage verhältnismäßig klein. Ein Großteil der Abwärme muß daher nutzlos abgeführt werden und stellt deshalb eine thermische Belastung sowie in vielen Fällen eine Geruchsbelästigung der Umwelt dar.

Der Erfindung liegt daher die die Aufgabe zugrunde, ein Verfahren anzugeben, mit dem Brüdenverdichtungsanlagen möglichst wirtschaftlich betrieben werden können.

Diese Aufgabe wird erfindungsgemäß dadurch gelöst, daß in den Brüden enthaltene Fremdstoffe vor Verdichtung der Brüden aus diesen durch Abscheiden, Filtern oder Auswaschen getrennt werden.

Bei einer Reihe von Eindickprozessen werden Flüssigkeiten behandelt, die Fremdstoffe enthalten. Hierbei kann es sich um in der Flüssigkeit gelöste sowie um nicht gelöste Fremdstoffe - z.B. Feststoffe - handeln. Diese gelangen beim Kochen der Flüssigkeit teilweise in den Brüden und werden mit diesen zum Verdichter transportiert. Während der Verdichtung werden die Brüden erwärmt und dabei Flüssigkeitstropfen verdampft. Je nach Art der Fremdstoffe bilden diese dabei im Verdichter Rückstände. Beispielsweise sind bei der Bierherstellung in der Würze zuckerhaltige gelöste Stoffe, Hopfen (vorwiegend in fester Form) und koagulierte Eiweißbestandteile enthalten. Diese Stoffe gelangen beim Würzekochen teilweise über den Brüden in den Verdichter und neigen dort bei den auftretenden hohen Temperaturen von über 150°C zum Karamelisieren und Anbacken. Diese Ablagerungen bewirken aber eine Verschlechterung der Betriebseigenschaften und rufen Betriebsstörungen hervor. Diese Nachteile

0058877

werden mit dem erfindungsgemäßen Verfahren vermieden, da die Brüden vor dem Eintritt in den Verdichter durch einen Abscheider geleitet werden. Der Abscheider dient daher primär dem Schutz des Brüden-Verdichters. Durch die erfindungsgemäße Verfahrensweise wird sichergestellt, daß die Brüdendämpfe nahezu vollständig von Fremdstoffen befreit werden, wodurch nicht nur der Verdichter sondern auch der nachgeschaltete Verflüssiger vor Verunreinigungen geschützt und die Standzeiten zwischen zwei Reinigungsintervallen erheblich verlängert werden.

Erst durch die Entfernung der Verunreinigungen lassen sich die Vorteile einer Brüdenverdichtung - das sind im wesentlichen eine erhebliche Reduzierung des Energiebedarfs für Eindickprozesse sowie eine thermische Entlastung der Umwelt - voll nutzen. Zusätzlich sinken die Betriebskosten, da die Standzeit zwischen zwei Reinigungsintervallen deutlich verlängert werden.

Die Trennvorrichtung, in der die Brüden von Verunreinigungen befreit werden, muß neben einem hohen Abscheidegrad unanfällig gegen Verstopfungen sein und gute Reinigungsmöglichkeiten besitzen. In einer vorteilhaften Ausgestaltung des Erfindungsgedankens findet ein unter Ausnutzung der Fliehkraft arbeitender Abscheider Anwendung, der diese Kriterien in besonderem Maß erfüllt.

In einer Vorrichtung zur Nutzung der Wärme der bei Eindickprozessen von Flüssigkeiten entstehenden Brüden wird der Brüden aus einer oder mehreren Kochpfannen zunächst einem Verdichter und anschließend Kühleinrichtungen zugeführt. Erfindungsgemäß kann in eine derartige Anlage mit Vorteil ein Abscheider eingebaut werden, dessen Eingang an die Kochpfanne(n) und dessen Ausgang an den bzw. die Verdichter angeschlossen ist. Die Verdichter können von allen Kraftmaschinenarten - z.B. Elektromotor, Verbrennungsmotor, Dampfturbine - angetrieben werden. Mit besonderem Vorteil findet erfindungsgemäß ein Fliehkraftabscheider Anwendung, in den Reinigungsdüsen insbesondere zum Auswaschen der Feststoffe eingebaut sind. Die Düsen ermöglichen eine Reinigung des Abscheiders, ohne daß dieser geöffnet werden oder die Brüdenverdichtungsanlage abgeschaltet werden müßte.

In einer vorteilhaften Ausgestaltung des Erfindungsgedankens ist im Fliehkraftabscheider, der einen Gaseintritt, einen axialen Gasaustritt sowie eine Austragsöffnung unterhalb des Abscheideraums besitzt, oberhalb des Abscheideraums eine kegelige Abschirmung so angeordnet, daß die Kegelachse und die Längsachse des Abscheiders zusammenfallen und der Kegelmantel bis nahe an die Abscheiderinnenwand reicht. Da die Abschirmung, die die Abscheidewirkung erhöht, kegelförmig ausgebildet ist, kann die Abschirmung leicht über die Reinigungsdüsen gereinigt werden.

Zu diesem Zweck sind nach einer weiteren Ausgestaltung des Erfindungsgedankens mit Vorteil innerhalb des Abscheiders über der Abschirmung sowie über dem Gasaustritt je ein Reinigungskopf mit Sprühdüsen angeordnet, in den eine durch die Abscheiderwand führende Leitung mündet. Die Sprühdüsen sind so orientiert, daß über sie eine Reinigungsflüssigkeit auf die Einbauten in der Nachbarschaft des Reinigungskopfes geleitet werden kann.

Nach größeren Zeitabständen kann es zweckmäßig sein, den Abscheider gründlich durch Einleiten von Wasser, Säure und Lauge zu reinigen. Um beim Einleiten dieser Flüssigkeiten die Bildung von Gaspolstern unter Einbauten (z.B. unter der Abschirmung oder dem Gasaustritt) zu vermeiden, befinden sich in diesem mit Vorteil Entlüftungsöffnungen, über die die Luft beim Anstieg des Flüssigkeitsspiegels ent-

weichen kann.

Anhand schematischer Skizzen soll ein Ausführungsbeispiel einer erfindungsgemäßen Vorrichtung beschrieben werden.

Es zeigen:

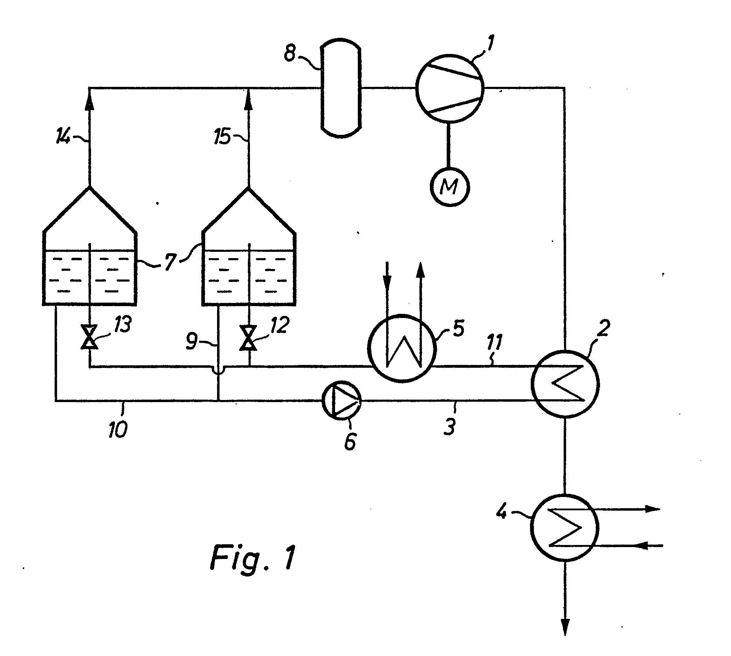

Figur 1 ein Schema einer erfindungsgemäßen Brüdenverdichtungsanlage

Figur 2 einen erfindungsgemäßen Abscheider

Im Ausführungsbeispiel sind zwei zur Herstellung von Bier dienende Würzepfannen 7 dargestellt. Der Kopf jeder Würzepfanne 7 ist über je eine Brüdendampfleitung 14, 15 an einen Abscheider 8 angeschlossen. Der Ausgang des Abscheiders ist seinerseits mit der Saugseite eines von einem Motor M angetriebenen Verdichters 1 verbunden. Als Verdichter eignen sich beim erfindungsgemäßen Verfahren in besonderem Maß ein- bzw. mehrstufige Turboverdichter. Der Bodenbereich jeder Würzepfanne 7 ist über je eine Würzeleitung 9, 10 an eine zu einem Kondensator 2 führende Leitung 3 angeschlossen.

Die während des Würzekochens in den Würzepfannen 7 gebildeten Brüden werden über die Brüdendampfleitung 14 und 15 zu einem Fliehkraftabscheider 8 geleitet. Im Ausführungsbeispiel sollen ca. 10.000 kg/h Brüden mit einer Temperatur von ca. 100 °C und einem Druck von einem bar in den Abscheider eintreten. Im Abscheider werden die Brüden von Verunreinigungen befreit, die beim Kochen der Würze teilweise aus dieser in den Brüden gelangt sind.

Die gereinigten Brüden werden nach Austritt aus dem Fliehkraftabscheider im Verdichter1 auf ca. 1,7 bar verdichtet. Nachfolgend kondensieren die Brüden im Kodensator 2 im indirekten Wärmetausch mit Würze aus den Würzepfannen 7. Die Brüden ver-

Form. 5729 7.78

0058877

lassen den Kondensator mit einer Temperatur von etwa 115°C und werden anschließend in einem Warmwasserbereiter 4 auf ca. 20°C abgekühlt. Das Wasser wird dabei um ca. 65°C angewärmt. Zur Erwärmung der Würze in Kondensator 2 wird diese mittels einer in Leitung 3 eingebauten Pumpe 6 aus dem Bodenbereich der Würzepfannen abgezogen und durch den Kondensator 2 geleitet. Hierbei wird die Würze von ca. 100°C auf 108°C erhitzt. Anschließend wird die Würze über eine Leitung 11 zu einem Außenkocher 5 sowie anschließend über die Entspannungs-Einrichtungen 12,13 in die Würzepfannen 7 geführt. Der Außenkocher wird zum Einleiten des Verdampfungs-Prozesses benötigt und bei Betrieb der Brüden-Verdichtungsanlage abgeschaltet.

Mit dem vorgeschlagenen System lassen sich die Energiekosten je Gcal Wärme auf ca. 1/7 des Preises bei konventioneller Wärmeerzeugung senken.

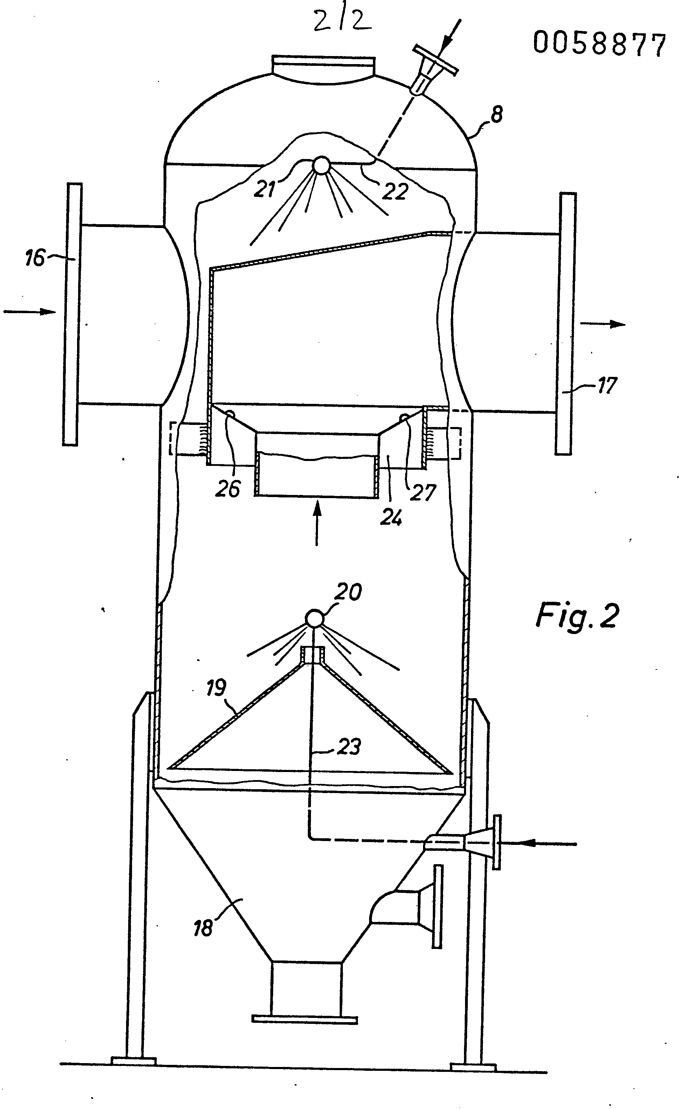

In Figur 2 ist ein erfindungsgemäßer Fliehkraftabscheider dargestellt. Der Fliehkraftabscheider 8 hat im wesentlichen die Form eines Zylinders. Im Kopfbereich des Abscheiders befinden sich Gaseintritt 16 sowie Gasaustritt 17. Oberhalb des Abscheideraums 18 ist eine die Abscheidewirkung verstärkende kegelige Abschirmung 19 angeordnet. Über dieser Abschirmung 19 sowie über dem innerhalb des Abscheiders liegenden Teil des Gasaustritts sind je ein Reinigungskopf 20,21 mit nichtdargestellten Sprühdüsen angeordnet. In die Reinigungsköpfe mündet je eine Leitung 22 und 23 zur Zuführung einer Reinigungsflüssigkeit. Die Sprühdüsen sind so orientiert, daß die Reinigungsflüssigkeit auf die Einbauten unter den jeweiligen Reinigungsköpfen trifft und diese von Verunreinigungen befreit. In der Kegelspitze der Abschirmung 19 sowie in dem innerhalb des Abscheiders liegenden Teil des Gasaustritts sind Entlüftungsöffnungen 25,26,27. Wird der Abscheider zum Zweck der Reinigung von unten

0058877

mit einer Flüssigkeit (Wasser, Säure, Lauge) gefüllt, kann die Luft aus dem Raum innerhalb der kegelförmigen Abschirmung bzw. aus dem Raum 24 entweichen. Es bilden sich daher keine Gaspolster, die den Zutritt der Reinigungsflüssigkeiten verhindern würden.

Patentansprüche

1. Verfahren zur Nutzung der Wärme der bei Eindickprozessen von Flüssigkeiten entstehenden Brüden, wobei die Brüden verdichtet und im Wärmetausch mit der Flüssigkeit gekühlt und kondensiert werden zum Zwecke der Flüssigkeitserwärmung oder -verdampfung, dadurch gekennzeichnet, daß in den Brüden enthaltene Fremdstoffe vor der Verdichtung der Brüden aus diesen durch Abscheiden, Filtern oder Auswaschen abgetrennt werden.

2. Verfahren nach Anspruch 1, dadurch gekennzeichnet, daß die Fremdstoffe nach dem Fliehkraftprinzip abgetrennt werden.

3. Vorrichtung zur Durchführung des Verfahrens nach einem der Ansprüche 1 oder 2 mit einer oder mehreren Kochpfanne(n), einem oder mehreren Verdichter(n) und dem bzw. den Verdichter(n) nachgeschalteten Kühleinrichtungen, gekennzeichnet durch einen Abscheider, dessen Eingang an die Kochpfanne(n) und dessen Ausgang an den bzw. die Verdichter angeschlossen ist.

4. Vorrichtung nach Anspruch 3, dadurch gekennzeichnet, daß der Abscheider ein Fliehkraftabscheider ist.

Form. 5729 7.78

5. Vorrichtung nach Anspruch 4 mit einem im wesentlichen zylindrisch geformten Fliehkraftabscheider mit einem Gaseintritt und einem axialen Gasaustritt sowie einer Austragsöffnung unterhalb des Abscheideraumes, dadurch gekennzeichnet, daß oberhalb des Abscheideraumes (18) eine kegelige Abschirmung (19) angeordnet ist, wobei die Kegelachse und die Längsachse des Abscheiders (8) fluchten und der Kegelmantel bis nahe an die Abscheiderinnenwand reicht.

6. Vorrichtung nach einem der Ansprüche 4 oder 5, dadurch gekennzeichnet, daß innerhalb des Abscheiders (8) über der Abschirmung (19) sowie über dem Gasaustritt je ein Reinigungskopf (20,21) mit Sprühdüsen angeordnet ist, in den eine durch die Abscheiderwand führende Leitung (22,23) mündet.

7. Vorrichtung nach einem der Ansprüche 4 bis 6, dadurch gekennzeichnet, daß sich in der Kegelspitze der Abschirmung (19) sowie in dem innerhalb des Abscheiders 8 liegenden Teil des Gasaustritts Entlüftungsöffnungen (25,26, 27) befinden.

8. Anwendung des Verfahrens und der Vorrichtung nach einem der Ansprüche 1 bis 7 auf die Nutzung der Wärme der bei der Bierherstellung anfallenden Brüden.

Fig. 1

0058877

*Fig.2*

# EUROPÄISCHER RECHERCHENBERICHT

**0058877**
Nummer der Anmeldung

EP 82 10 0950

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D | FR-A- 839 789 (ESCHER WYSS) <br> * Seite 1, Zeilen 42-48; Seite 2, Zeilen 38-65; Seite 3, Zeilen 9-28; Figur 1 * | 1,3 | B 01 D 1/28 <br> B 01 D 50/00 <br> C 12 C 9/00 |
| | --- | | |
| D | GB-A-1 063 533 (AQUA CHEMIE) <br> * Seite 2, Zeile 103 - Seite 3, Zeile 26; Figur * | 1,3 | |
| | --- | | |
| D,Y | GB-A- 446 587 (BLAIRS LTD.) <br> * Seite 3, Zeilen 1-26; Figur * | 1-4 | |
| | --- | | |
| Y | FR-A-2 314 770 (MIRO ATOMIZER) <br> * Seite 7, Zeile 23 - Seite 8, Zeile 7; Figur 1 * | 4,5 | |
| | --- | | RECHERCHIERTE SACHGEBIETE (Int. Cl. 3) |
| Y | FR-A-1 381 770 <br> (VICKERS-ARMSTRONGS) <br> * Seite 1, rechte Spalte; Figur 1 * | 1-4 | |
| | --- | | B 01 D <br> C 12 C |
| Y | US-A-4 008 056 (G. POTTER) <br> * Spalte 4, Zeile 23 - Spalte 5, Zeile 52; Figuren 2-4 * | 4-6 | |
| | --- | | |
| Y | US-A-3 989 485 (G.G. KILIAN) <br> * Insgesamt * | 4-6 | |
| | --- | | |

./.

Der vorliegende Recherchenbericht wurde für alle Patentansprüche erstellt.

| Recherchenort | Abschlußdatum der Recherche | Prüfer |
|---|---|---|
| DEN HAAG | 15-06-1982 | VAN BELLEGHEM W.R. |

Europäisches
Patentamt

**EUROPÄISCHER RECHERCHENBERICHT**

0058877
Nummer der Anmeldung

EP  82 10 0950

Seite 2

## EINSCHLÄGIGE DOKUMENTE

| Kategorie | Kennzeichnung des Dokuments mit Angabe. soweit erforderlich der maßgeblichen Teile | Betrifft Anspruch | KLASSIFIKATION DER ANMELDUNG (Int. Cl. 3) |
|---|---|---|---|
| Y | FR-A-2 345 207 (DELATTRE-LEVIVIER) * Seite 3, Zeilen 14-25; Seite 5, Zeile 16 - Seite 4, Zeile 2; Figuren * | 5,6 | |
| | --- | | |
| A | US-A-3 605 386  (J.R. ERWIN et al.) | | |
| | --- | | |
| A | EP-A-0 006 379  (P. ROSIER) | | |
| | --- | | |
| A | FR-A-1 222 320  (EMHART MANUF.) | | |
| | --- | | |
| A | FR-A- 898 046  (ESCHER WYSS) | | |
| | --- | | RECHERCHIERTE SACHGEBIETE (Int. Cl. 3) |
| A | GB-A- 847 551  (STRICO) | | |
| | ----- | | |

Der vorliegende Recherchenbericht wurde für alle Patentansprüche erstellt.

| Recherchenort DEN HAAG | Abschlußdatum der Recherche 15-06-1982 | Prüfer VAN BELLEGHEM W.R. |
|---|---|---|